# FASCICULE DE BREVET EUROPEEN

(11) **EP 0 748 778 B1**
(45) Date de publication et mention de la délivrance du brevet: **20.01.1999**
(21) Numéro de dépôt: 96201620.0
(22) Date de dépôt: 12.06.1996
(51) Int. Cl.: C04B 26/32, C08K 7/26, C08J 9/32

(54) **Composite de céramique souple et léger pour protections thermiques**
Leichter und weicher Keramikverbundwerkstoff für thermischen Schutz
Soft and light ceramic composite for heat shields

(30) Priorité: 12.06.1995 BE 9500516
(43) Date de publication de la demande: 18.12.1996
(73) Titulaire: SOCIETE TECHSPACE AERO, B-4041 Milmort, Herstal (BE)
(72) Inventeur: Mertens, Christine J.P., 4620 Fleron (BE)
(74) Mandataire: Berrou, Paul

(56) Documents cités:
- US-A- 3 126 357
- DATABASE WPI Section Ch, Week 9327 Derwent Publications Ltd., London, GB; Class A82, AN 93-217065 XP002013854 & JP 05 140 505 A (MATSUSHITA ELEC IND CO LTD) , 8 Juin 1993
- CHEMICAL ABSTRACTS, vol. 100, no. 6, 6 Février 1984 Columbus, Ohio, US; abstract no. 38659t, XP000402469 & JP 58 161 985 A (NISSAN MOTOR CO.,LTD NATIONAL AEROSPACE LABORATORY) 26 Septembre 1983
- DATABASE WPI Section Ch, Week 8012 Derwent Publications Ltd., London, GB; Class A26, AN 80-21076C XP002013855 & JP 55 018 418 A (SHINETSU CHEM IND KK) , 8 Février 1980
- JOURNAL OF CELLULAR PLASTICS, vol. 20, Novembre 1984 - Décembre 1984, LANCASTER,PENNSYLVANIA,US, pages 423-429, XP002013853 S.KENIG ET AL.: "Three-phase Silicone based Syntactic Foams"

## Description

La présente invention est relative à un composite de céramique souple et léger, dont la qualité principale est de réaliser une isolation aux sollicitations thermiques de longue durée.

Dans les industries aérospatiales performantes, on utilise différents types de céramiques pour leur tendance de résistance à la corrosion et à l'oxydation à chaud en tant que barrières thermiques, notamment les barrières thermiques composées d'une matrice en silicone chargée par des réfractaires. Une des meilleure est obtenue, en renforçant la matrice en silicone, par de la poudre de verte.

Cependant, leur résistance à haute température est relativement faible à cause de la tenue à chaud de la matrice en silicone, habituellement limitée à 200°C en continu. Leur altération à chaud est d'autant plus rapide et nuisible aux caractéristiques mécaniques et physico-chimiques que la température est haute. Elle se traduit par l'apparition de fissures profondes et par l'effritement de la matrice en silicone, qui retourne à l'état de poudre de silice.

La publication DERWENT XP 00 201 3854 décrit un revêtement comportant une matrice à base d'un polymère organique silicone contenant des particules céramiques creuses et poreuses, au moins un oxyde ou double oxyde métallique de Mn, Fe, Co, Ni et Cu, de la zircone et un additif choisi parmi l'alumine et la silice.

Le revêtement a un effet de rayonnement infrarouge pour élément de chauffage et les particules céramiques laissent passer l'oxygène pour la décomposition d'un produit pétrolier.

La publication DERWENT XP 00 201 3855 décrit une mousse de résine silicone comprenant un organopolysiloxane renfermant divers additifs tels qu'oxydes métalliques, par exemple alumine, de la poudre de quartz, du mica mais sans zircone yttriée.

US 3.126.357 décrit un composite à base de matrice en silicone comprenant des particules de mica, de silice et d'au moins un matériau réfractaire tel que zircone. Une densité élevée est recherchée par l'utilisation de silice sous forme cristobalite.

La présente invention a pour objet de porter remède à cet inconvénient de faible résistance à haute température tout en donnant au composite de céramique revendiqué des caractéristiques mécaniques plus élevées à haute température, alliées a la légèreté et à une souplesse le rendant apte à amortir les vibrations et les ondes acoustiques Un tel composite est destiné notamment aux industries de l'aéronautique et du spatial.

Ce composite de céramique souple, objet de la présente invention, est caractérisé en ce qu'il contient trois éléments principaux qui lui confèrent ses caractéristiques physico-chimiques et mécaniques de base: une matrice en silicone haute température a raison de 16 à 88 % en poids, sous forme de particules sphériques, creuses et fermées des microsphères de quartz à raison de 2 à 21 %, et de la zircone yttriée à raison de 1 à 15% en poids, ainsi qu'au moins un additif tel que le mica, le fluorure de calcium et l'alumine.

Les microsphères de quartz sont de préférence creuses: elles présentent avantageusement un diamètre compris entre 20 et 150 µmétres.

Les microsphères de quartz, la zircone et les additifs sont de préférence répartis dans la matrice en silicone. La zircone yttriée contient de 5% à 10% en poids d'oxyde d'yttrium et de préférence environ 7 %, rapportés au poids de zircone.

Suivant les caractéristiques supplémentaires, les additifs présentent les teneurs suivantes :
mica : 2 - 10 % en poids,
fluorure de calcium : 3 - 8% en poids,
alumine: 4 - 27 % en poids,
+ substance moussante et/ou activateur de polymérisation : 0 à 3 % en poids.

La souplesse, la légèreté et les hautes résistances mécaniques et physicochimique du composite de l'invention sont consolidées par les additifs précités , qui peuvent être présents seuls ou en combinaisons quelconques.

Ces gammes de compositions permettent de produire le composite sans grandes difficultés par une méthode traditionnelle de coulée à l'air ou par injection et pistolage, suivant les applications désirées, suivie par un étuvage de polymérisation à température modérée.

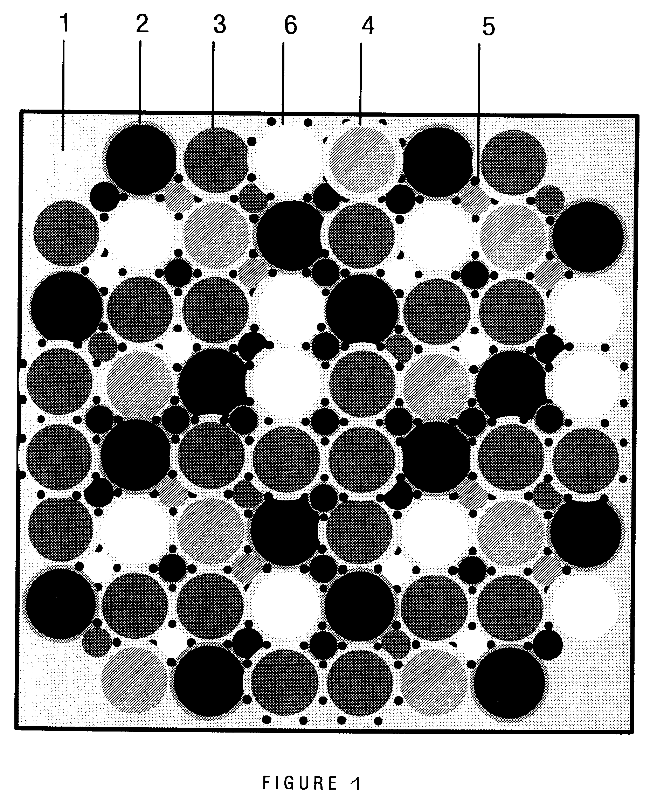

La structure du composite de l'invention est illustrée, à titre d'exemple, par la figure unique annexée, qui montre une matrice en silicone (1) dans laquelle sont dispersées des microsphères creuses de quartz (2) , des particules de zircone yttriée (3), ainsi que des particules de mica (4), de fluorure de calcium (5) et d'alumine (6).

La formulation proposée confère à ce composite ses propriétés de barrière anti - feu incombustible , sa légèreté, son aptitude à amortir les vibrations par sa souplesse, ses capacités d'isolation thermique et acoustique.

Sa légèreté est obtenue par sa porosité et sa teneur en microsphères creuses de quartz. Suivant sa conception , la densité du composite de l'invention peut se situer entre 0,35 et 1, 45.

Sa souplesse et son aptitude à amortir les vibrations lui sont conférées par sa teneur en silicone haute température. En épaisseur de 7 mm , il peut être replié sur lui-même sans fissuration. Il peut être soumis à plusieurs dizaines de g sans décrochage.

Sa résistance à chaud est excellente. Les céramiques incorporées telles que la zircone yttriée , le mica et l'alumine jouent un rôle d'isolants thermiques et de renforts mécaniques de la matrice en silicone. A titre d'exemple, après 5 minutes de contact direct avec une flamme de 950°C, la face opposée, sur une épaisseur de 20 millimètres, n'atteint que 100 °C. La perte de poids à chaud est limitée en raison de l'emprisonnement de la matrice en silicone entre les grains de réfractaires et les microsphères de quartz.

La progression de l'onde thermique, par conduction, est freinée par les porosités et cellules de quartz creuses et fermées. Sa progression est aussi contrariée par la formation automatique, dans les zones les plus exposées, d' un écran au rayonnement thermique, en raison de la formation d'une couche pulvérulente de silice venant de la matrice et des micro - sphères de quartz. Cette couche joue le rôle de réflecteur aux infrarouges.

Ce phénomène est renforcé par le fluorure de calcium qui joue le rôle de pompe à chaleur lors de son évaporation. Le résultat est le ralentissement de la progression de l'onde thermique par conduction. Pour ce faire, il est micronisé et finement réparti dans la matrice comme on peut le voir dans la figure.

La résistance de ce composite à la corrosionloxydation est de loin supérieure à celle de tous les alliages métalliques utilisés actuellement. Des échantillons de ce composite ont été exposés avec succès à des gaz de combustion de moteurs de lanceurs spatiaux. Ces échantillons sont restés pratiquement intacts, permettant des tirs successifs sans démontages. Par sa composition, le composite est pratiquement inerte. Il permet, dans son environnement, des moyens d'extinction tels que le CO2, mousses, poudres, eau pulvérisée,....

## Revendications

1. Composite de céramique souple, caractérisé en ce qu'il comporte une matrice en silicone pour haute température à raison de 16 à 88 % en poids, contenant une dispersion de quartz à raison de 2 à 21 % en poids, sous forme de particules sphériques, creuses et fermées et de zircone yttriée à raison de 1 % à 15 % en poids ainsi que d'au-moins un additif choisi parmi le mica, le fluorure de calcium et l'alumine.

2. Composite suivant la revendication 1, caractérisé en ce que lesdites particules sphériques de quartz ont un diamètre extérieur compris entre 20 et 150 µmètres.

3. Composite suivant l'une ou l'autre des revendications 1 ou 2, caractérisé en ce que la zircone est stabilisée à l'aide de 5 % a 10 % d'oxyde d'yttrium, rapportés au poids de zircone.

4. Composite suivant l'une ou l'autre des revendications 1 à 3 caractérisé en ce qu'il contient 2 % a 10 % en poids de mica.

5. Composite suivant l'une ou l'autre des revendications 1 a 4, caractérisé en ce qu'il contient 3 % à 8 % en poids de fluorure de calcium.

6. Composite suivant l'une ou l'autre des revendications 1 à 5, caractérisé en ce qu'il contient 4 à 27 % en poids d'alumine.

7. Composite suivant l'une ou l'autre des revendications 1 à 6, caractérisé en ce qu'il contient 0 à 3 % en poids de substance moussante et/ou d'activateur de polymérisation.

## Claims

1. A flexible ceramic composite, characterised in that it comprises a high-temperature silicone matrix in a proportion of from 16 to 88 wt.% containing a dispersion of quartz in a proportion of from 2 to 21 wt.% in the form of closed hollow spherical particles and of yttriated zirconia in a proportion of from 1 to 15 wt.% and at least one additive chosen from mica, calcium fluoride and alumina.

2. A composite according to claim 1, characterised in that the spherical quartz particles have an external diameter between 20 and 150 um.

3. A composite according to claim 1 or claim 2, characterised in that the zirconia is stabilised by means of from 5 to 10% of yttrium oxide relative to the weight of zirconia.

4. A composite according to any of claims 1 to 3, characterised in that it contains from 2 to 10 wt.% of mica.

5. A composite according to any of claims 1 to 4, characterised in that it contains from 3 to 8 wt.% of calcium fluoride.

6. A composite according to any of claims 1 to 5, characterised in that it contains from 4 to 27 wt.% of alumina.

7. A composite according to any of claims 1 to 6, characterised in that it contains from 0 to 3 wt.% of a foaming agent and/or polymerisation activator,

## Patentansprüche

1. Flexibles Keramik-Verbundmaterial, dadurch gekennzeichnet, daß es eine Hochtemperatur-Silikonmatrix in einer Menge von 16 bis 88 Gew.-% umfaßt, die 2 bis 21 Gew.-% einer Quartz-Dispersion, die aus kugeligen, hohlen und verschlossenen Teilchen besteht, und 1 bis 15 Gew.-% yttriiertes Zirkon sowie mindestens einen Zusatz, ausgewählt unter Glimmer, Calciumfluorid und Alminiumoxid enthält.

2. Verbundmaterial nach Anspruch 1, dadurch gekennzeichnet, daß die kugeligen Quartz-Teilchen einen Außendurchmesser zwischen 20 und 150 µm aufweisen.

3. Verbundmaterial nach einem der Ansprüche 1 oder 2, dadurch gekennzeichnet, daß das Zirkon mit 5 % bis 10 % Yttriumoxid, bezogen auf das Gewicht von Zirkon, stabilisiert wird.

4. Verbundmaterial nach einem der Ansprüche 1 bis 3, dadurch gekennzeichnet, daß es 2 bis 10 Gew.-% Glimmer enthält.

5. Verbundmaterial nach einem der Ansprüche 1 bis 4, dadurch gekennzeichnet, daß es 3 bis 8 Gew.-% Calciumfluorid enthält.

6. Verbundmaterial nach einem der Ansprüche 1 bis 5, dadurch gekennzeichnet, daß es 4 bis 27 Gew.-% Aluminiumoxid enthält

7. Verbundmaterial nach einem der Ansprüche 1 bis 6, dadurch gekennzeichnet, daß es 0 bis 3 Gew.-% eines Schaummittels, und/oder eines Polymerisationsaktivators enthält.
